# EUROPEAN PATENT APPLICATION

(11) **EP 4 459 850 A1**
(43) Date of publication of application: **06.11.2024**
(21) Application number: 23796021.6
(22) Date of filing: 04.04.2023
(51) Int. Cl.: H02K 9/19

(54) **WOUND-FIELD ROTATING ELECTRIC MACHINE**

(30) Priority: 28.04.2022 JP 2022074242
(71) Applicant: AISIN CORPORATION, Kariya-shi, Aichi 448-8650 (JP)
(72) Inventor: SHIOTSUKI, Yasunobu, Kariya-shi, Aichi 448-8650 (JP); HIROSE, Shota, Kariya-shi, Aichi 448-8650 (JP); ANZAWA, Mitsumasa, Kariya-shi, Aichi 448-8650 (JP)
(74) Representative: Kramer Barske Schmidtchen Patentanwälte PartG mbB
(86) International application number: PCT/JP2023/013878
(87) International publication number: WO 2023/210274

(57) **Abstract**

Disclosed is a wound-field rotary electric machine including a stator, a rotor, and a coolant passage that communicates with a pump configured to pump a liquid coolant. A stator coil includes a coil end portion that protrudes in an axial direction from an axial end face of a stator core. An axial end of a field winding protrudes in the axial direction from an axial end face of a rotor core and is covered with a resin portion. The rotor further includes a cover member that covers the axial end of the field winding. The liquid coolant is supplied to an axially outer end face of the cover member via the coolant passage. The axially outer end face of the cover member has a recess extending on an axially inner side of the axial end of the field winding between tooth portions of the rotor core in a circumferential direction when viewed in the axial direction.

## Description

### TECHNICAL FIELD

The present disclosure relates to a wound-field rotary electric machine.

### BACKGROUND ART

There is known a technology for spraying a liquid coolant toward the axial end of a field winding (portion protruding in an axial direction from the end face of a rotor core) from an axially outer side.

### Related Art Documents

### Patent Documents

Patent Document 1: WO2018/095842

### SUMMARY OF THE INVENTION

### Problem to be Solved by the Invention

In a configuration in which the axial end of the field winding is covered with resin, oil (liquid coolant) cannot directly be supplied to the field winding. Therefore, it is difficult to effectively cool the field winding with the oil supplied to the axial end face of a rotor.

In one aspect, the present disclosure has an object to effectively cool a field winding etc. with a liquid coolant in a configuration in which the axial end of the field winding is covered with resin.

### Means for Solving the Problem

One aspect provides a wound-field rotary electric machine including:
a stator including a stator core and a stator coil;
a rotor including a shaft portion, a rotor core coaxially fixed to the shaft portion, and a field winding that is wound around a tooth portion of the rotor core, the rotor being disposed coaxially with the stator with a clearance provided in a radial direction; and a coolant passage that communicates with a pump configured to pump a liquid coolant, in which
the stator coil includes a coil end portion that protrudes in an axial direction from an axial end face of the stator core,
an axial end of the field winding protrudes in the axial direction from an axial end face of the rotor core and is covered with a resin portion,
the rotor further includes a cover member that covers the axial end of the field winding, the liquid coolant is supplied to an axially outer end face of the cover member via the coolant passage, and
the axially outer end face of the cover member has a recess extending on an axially inner side of the axial end of the field winding between the tooth portions of the rotor core in a circumferential direction when viewed in the axial direction.

### Effects of the Invention

In one aspect, according to the present disclosure, it is possible to effectively cool the field winding etc. with the liquid coolant in the configuration in which the axial end of the field winding is covered with resin.

### BRIEF DESCRIPTION OF THE DRAWINGS

[FIG. 1] FIG. 1 is a configuration diagram showing a vehicle drive system including a drive device for a rotary electric machine according to an embodiment.
[FIG. 2] FIG. 2 is a schematic sectional view showing part of a cross section of the rotary electric machine.
[FIG. 3] FIG. 3 is a schematic sectional view showing part of the cross section of the rotary electric machine (cross section taken along line A-A in FIG. 2).
[FIG. 4] FIG. 4 is a sectional view of a rotor alone.
[FIG. 5] FIG. 5 is a schematic sectional view showing the axial end of a rotor corresponding to portion Q2 in FIG. 2.
[FIG. 6] FIG. 6 is a schematic sectional view showing the axial end of a rotor according to a comparative example.
[FIG. 7] FIG. 7 is a diagram schematically showing a flow of oil at an inclined portion of the axial end face of a cover member according to the embodiment.
[FIG. 8] FIG. 8 is a diagram schematically showing a flow of oil on the axial end face of a cover member according to the comparative example.
[FIG. 9] FIG. 9 is a schematic sectional view of the axial end of the rotor at a circumferential position that does not pass through a tooth portion.
[FIG. 10] FIG. 10 is a diagram schematically showing a flow of oil at a recess in the axial end face of the cover member according to the embodiment.
[FIG. 11] FIG. 11 is a flowchart schematically showing a flow of a method for manufacturing the rotor according to the embodiment.
[FIG. 12] FIG. 12 is a diagram illustrating a resin injection step in the manufacturing method shown in FIG. 11.
[FIG. 13] FIG. 13 is a schematic sectional view showing the axial end of a rotor according to another embodiment.
[FIG. 14] FIG. 14 is a schematic sectional view showing the axial end of the rotor according to the other embodiment.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

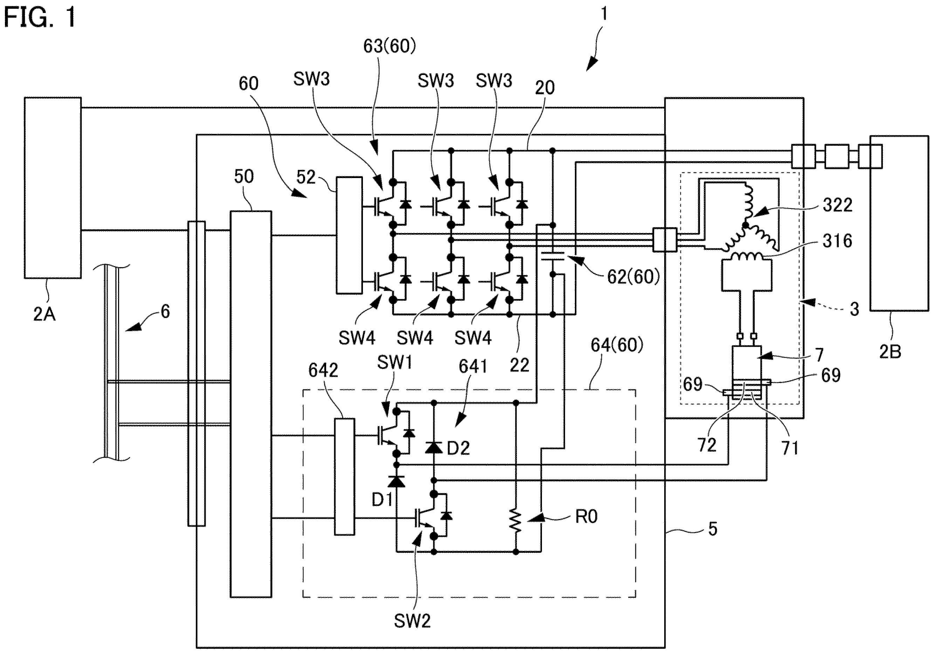

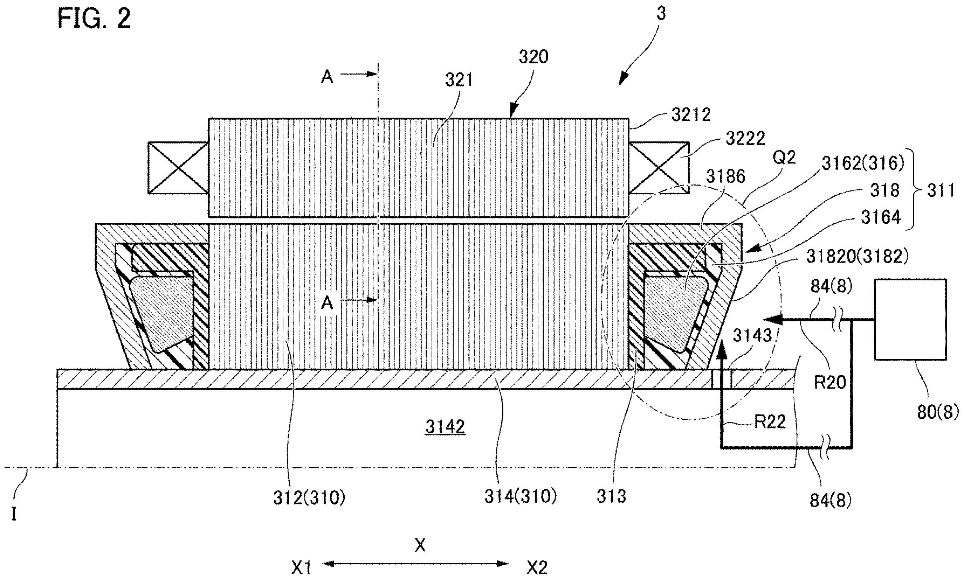

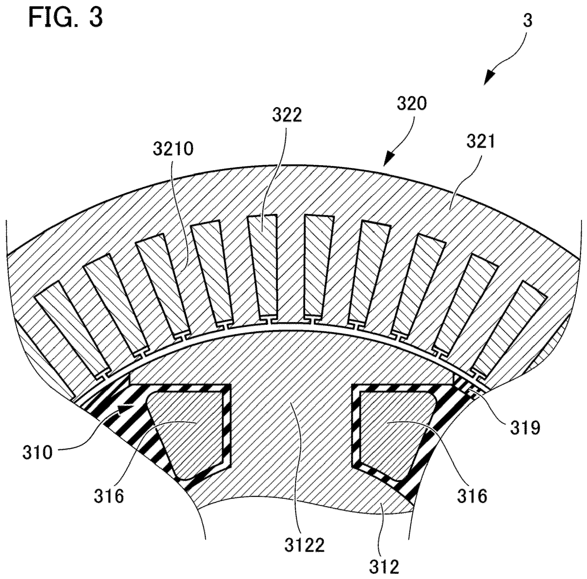

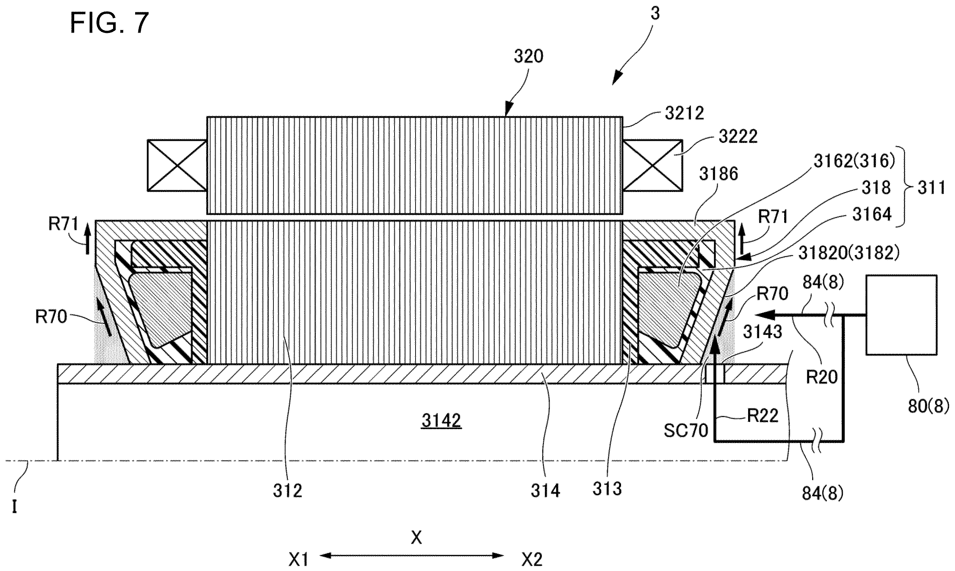

FIG. 1 is a configuration diagram showing a vehicle drive system 1 including a drive device 5 for a rotary electric machine according to an embodiment. FIG. 2 is a schematic sectional view showing part of a cross section of a rotary electric machine 3 (cross section cut along a plane including a rotation axis I). FIG. 3 is a schematic sectional view showing part of the cross section of the rotary electric machine 3 (cross section taken along line A-A in FIG. 2). In FIG. 2, an X direction along the rotation axis I of the rotary electric machine 3 and X1 and X2 sides are defined. FIGS. 1 and 2 schematically show a power supply device 7 on a rotational side and a brush 69 (only in FIG. 1). FIG. 2 (as well as FIG. 7 etc. described later) is also a schematic diagram of an oil supply system including an oil supply device 8.

In the following description, an axial direction refers to a direction in which the rotation axis I of the rotary electric machine 3 extends (X direction), and a radial direction refers to a radial direction about the rotation axis I. Therefore, a radially outer side refers to a side away from the rotation axis I, and a radially inner side refers to a side toward the rotation axis I. An axially outer side refers to a side away from the axial center of a stator 320, and an axially inner side refers to a side toward the axial center of the stator 320. A circumferential direction corresponds to a rotation direction about the rotation axis I.

The vehicle drive system 1 has a dual power supply configuration including a low-voltage battery 2A and a high-voltage battery 2B, and includes the rotary electric machine 3 and the drive device 5.

The low-voltage battery 2A is, for example, a lead battery, and has a rated voltage of, for example, 12 V

The high-voltage battery 2B is, for example, a lithium-ion battery, and has a rated voltage significantly higher than that of the low-voltage battery 2A, for example, a rated voltage of 40 V or higher. In the present embodiment, the rated voltage of the high-voltage battery 2B is set to, for example, 300 V or higher. The high-voltage battery 2B may be a fuel cell etc.

The rotary electric machine 3 is of a wound field type including the power supply device 7 on the rotational side and the brush 69, and includes a rotor 310 and the stator 320.

The rotor 310 is disposed on a radially inner side of the stator 320 coaxially with the stator 320 with a clearance provided in the radial direction. The rotor 310 includes a rotor core 312, end plates 313, a shaft portion 314, a rotor winding 316, and cover members 318. The rotor core 312 is coaxially fixed to the shaft portion 314. As shown in FIG. 3, the rotor core 312 includes a tooth portion 3122 that protrudes radially outward, and a conductor wire that forms the rotor winding 316 is wound around the tooth portion 3122.

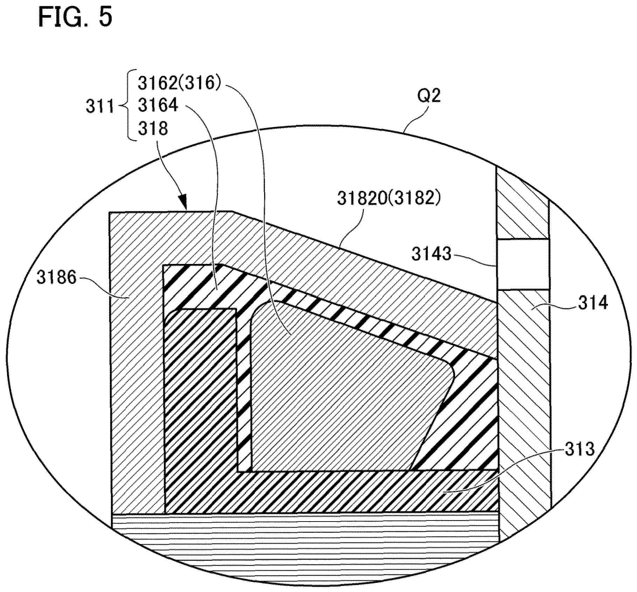

In the present embodiment, an axial end 3162 of the rotor winding 316 protrudes in the axial direction from the axial end face of the rotor core 312. As shown in FIG. 2 (see FIG. 5 described later as well), the axial end 3162 of the rotor winding 316 is structured such that the radially outer side protrudes axially outward more than the radially inner side.

In the present embodiment, the axial end 3162 of the rotor winding 316 is covered with a resin portion 3164. That is, the axial end 3162 of the rotor winding 316 is sealed with an insulating resin material.

The resin portion 3164 may further extend into a slot 3123 of the rotor core 312. The resin portion 3164 may be joined on the radially outer side to a radial cover 319, joined to a slot-housed portion 3161 of the rotor winding 316, and joined to the rotor core 312 (surface forming the slot 3123) around the slot-housed portion 3161. That is, the resin portion 3164 may be formed by filling (being injected into) the slot 3123 of the rotor core 312 whose radially outer side is covered with the radial cover 319. In this case, the resin portion 3164 may be formed by injection molding etc.

The cover member 318 is made of a material having higher thermal conductivity than the resin portion 3164, and is preferably made of a material having high thermal conductivity, such as aluminum. The cover member 318 covers the axial end 3162 of the rotor winding 316 via the resin portion 3164. That is, the resin portion 3164 extends between the cover member 318 and the rotor winding 316. Thus, heat from the rotor winding 316 can be transferred more efficiently to the cover member 318 via the resin portion 3164 than in a case where a clearance (air layer) is provided between the cover member 318 and the rotor winding 316.

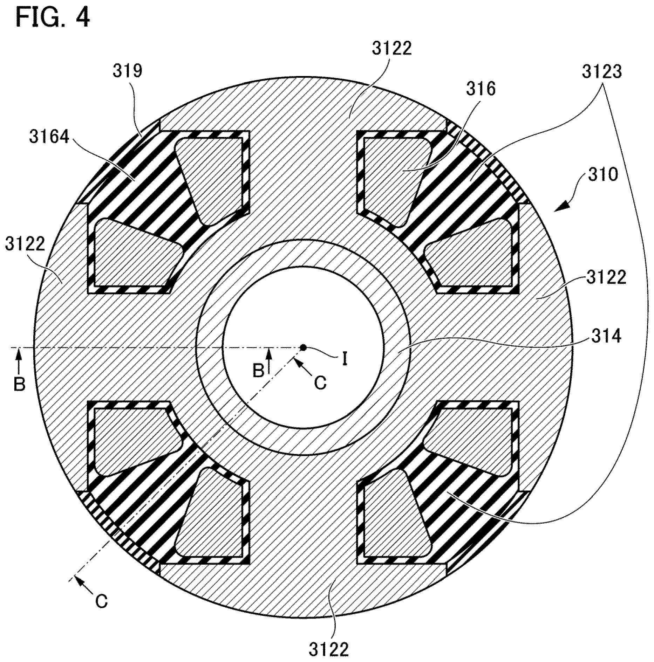

Further details of the configuration of an axial end 311 of the rotor 310, including the cover member 318, will be described later with reference to FIG. 4 onwards.

The stator 320 includes a stator core 321 and a stator winding 322. As shown in FIG. 3, the stator winding 322 is wound around a tooth portion 3210 of the stator core 321. As shown in FIG. 2, the stator winding 322 includes coil end portions 3222 that protrude axially outward from axial end faces 3212 of the stator core 321.

The drive device 5 includes a microcomputer 50 and an electric circuit unit 60.

The microcomputer 50 may be implemented as, for example, an ECU (Electronic Control Unit). The microcomputer 50 is connected to various electronic components (other ECUs and sensors) in the vehicle via a network 6 such as a CAN (controller area network).

The microcomputer 50 receives various commands such as control commands from a host ECU (not shown) via the network 6. The microcomputer 50 controls the rotary electric machine 3 via the electric circuit unit 60 based on the control commands.

The electric circuit unit 60 includes a smoothing capacitor 62, a power conversion circuit unit 63, and a power supply circuit unit 64.

The smoothing capacitor 62 is provided between a high-potential-side line 20 and a low-potential-side line 22 of the high-voltage battery 2B. A resistor R0 for passive discharge may be connected to both ends of the smoothing capacitor 62.

The power conversion circuit unit 63 is an inverter, and forms, for example, a three-phase bridge circuit. The power conversion circuit unit 63 is connected between the high-potential-side line 20 and the low-potential-side line 22 in parallel with the smoothing capacitor 62. The power conversion circuit unit 63 includes switching elements SW3 of high-potential-side arms and switching elements SW4 of low-potential-side arms. In this case, the microcomputer 50 may control energization of the stator windings 322 by controlling the ON/OFF states of the switching elements SW3, SW4 of the power conversion circuit unit 63 via a gate driver circuit 52.

The power supply circuit unit 64 includes a bridge circuit unit 641 and a drive circuit unit 642.

The bridge circuit unit 641 is connected between the high-potential-side line 20 and the low-potential-side line 22 in parallel with the smoothing capacitor 62 and the resistor R0 for passive discharge. The bridge circuit unit 641 includes a pair of switching elements SW1, SW2 and a pair of diodes D1, D2.

The switching element SW1 is connected in series to the diode D1 in such a manner that the switching element SW1 is connected to a cathode on a high-potential side of the diode D1. A positive end of the rotor winding 316 is electrically connected between the switching element SW1 and the diode D1 via a positive slip ring 71 and the brush 69 described later. The switching element SW2 is connected in series to the diode D2 in such a manner that the switching element SW2 is connected to an anode on a low-potential side of the diode D2. A negative end of the rotor winding 316 is electrically connected between the switching element SW2 and the diode D2 via a negative slip ring 72 and the brush 69 described later.

The pair of switching elements SW1, SW2 is switched between the ON and OFF states via the drive circuit unit 642. The pair of switching elements SW1, SW2 changes the state of energization of the rotor winding 316 under the control of the drive circuit unit 642. The switching elements SW1, SW2 are, for example, IGBTs (Insulated Gate Bipolar Transistors), but may be of other types such as MOSFETs (Metal Oxide Semiconductor Field-Effect Transistors).

The drive circuit unit 642 drives gates of the switching elements SW1, SW2 based on control signals from the microcomputer 50.

Next, the characteristic configuration of the present embodiment will be described referring to FIG. 4 onwards while referring continuously to FIG. 2.

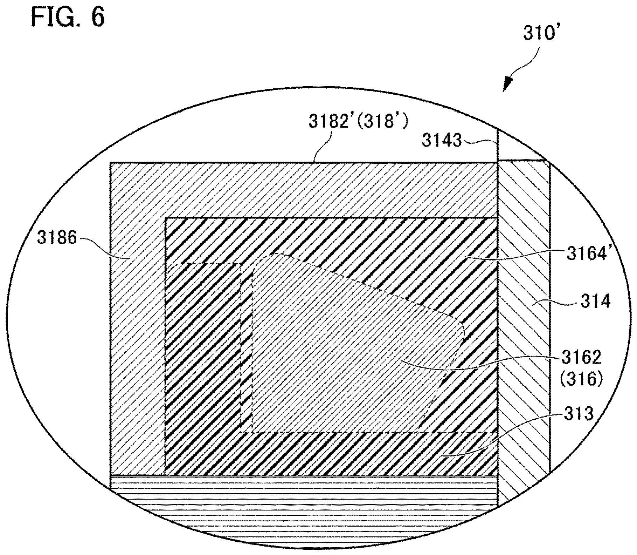

FIG. 4 is a sectional view of the rotor 310 alone that is cut along a plane perpendicular to the axial direction. FIG. 5 is a schematic sectional view showing the axial end 311 of the rotor 310 corresponding to portion Q2 in FIG. 2, and is a sectional view at a circumferential position corresponding to line B-B in FIG. 4. FIG. 6 is a schematic sectional view showing an axial end of a rotor 310' according to a comparative example, and is a sectional view at a circumferential position corresponding to that in FIG. 5.

In the present embodiment, the axial end 311 of the rotor 310 includes the axial end 3162 of the rotor winding 316, the resin portion 3164, and the cover member 318 as described above.

The axial end 311 of the rotor 310 is cooled by oil (example of "liquid coolant"). Specifically, the oil supply device 8 is provided, and as schematically shown in FIG. 2, the oil supply device 8 includes an oil pump 80 that pumps oil to the rotary electric machine 3 etc. The oil pump 80 is supported by a case (not shown) that houses the rotary electric machine 3. The oil pump 80 may be of a mechanical type or an electric type. The oil supply device 8 may include a combination of a mechanical oil pump and an electric oil pump. The oil supply device 8 may include an oil cooler for reducing the temperature of oil discharged from the oil pump 80, a strainer, etc.

In the present embodiment, the oil supply device 8 has an oil passage 84 through which oil discharged from the oil pump 80 is supplied to the axial end 311 of the rotor 310. The oil passage 84 may be formed in the case (not shown), may be formed by a tubular member such as a pipe, or may be realized by a combination of an oil passage in the case and a tubular member. One end of the oil passage 84 communicates with the oil pump 80, and the other end communicates with a peripheral space of the axial end 311 of the rotor 310.

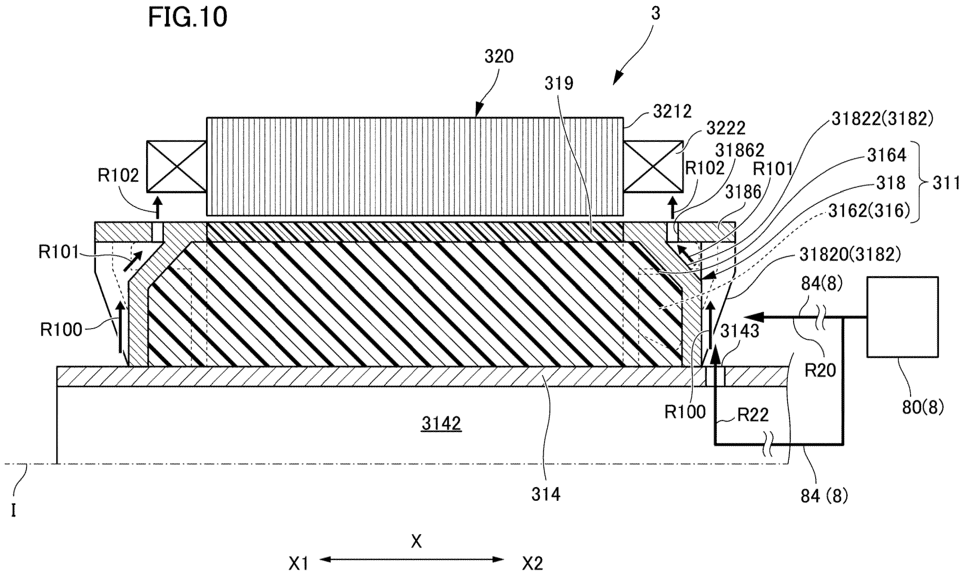

For example, the oil passage 84 may have a nozzle (not shown) that faces the axial end 311 of the rotor 310 (axial end face 3182 of the cover member 318) in the axial direction from the axially outer side. In this case, oil may be sprayed from the nozzle to hit the axial end 311 of the rotor 310 (axial end face 3182 of the cover member 318) in the axial direction by an oil pressure increased by the oil pump 80 (see arrow R20 in FIG. 2). Alternatively, the oil passage 84 may have a nozzle 3143 that communicates with an oil passage (hollow axial oil passage) 3142 in the shaft portion 314 and faces the axial end 311 of the rotor 310 in the radial direction. In this case, oil may be sprayed from the nozzle 3143 to hit the axial end 311 of the rotor 310 (e.g., the axial end face 3182 of the cover member 318) by a centrifugal force (see arrow R22 in FIG. 2). Alternatively, the oil may be sprayed from the nozzle 3143 slightly axially outward of the axial end 311 of the rotor 310 (axial end face 3182 of the cover member 318) by a centrifugal force (see FIG. 10 described later). The nozzles 3143 may be provided at a plurality of positions in the circumferential direction. In FIG. 2, the oil passage 84 related to the axial end 311 on the X2 side of the rotor 310 in the X direction is schematically shown by the flow of oil passing therethrough, but the same may apply to an oil passage related to the axial end 311 on the X1 side of the rotor 310 in the X direction.

In the present embodiment, the oil is supplied to the axial end face 3182 of the cover member 318 oriented axially outward (outer face opposite to the inner face that faces the axial end 3162 of the rotor winding 316) via the oil passage 84 as described above as shown in FIG. 5. Thus, the axial end 311 of the rotor 310 (in particular, the axial end 3162 of the rotor winding 316) can be cooled by the oil via the cover member 318 having relatively high thermal conductivity.

In the present embodiment, the resin portion 3164 is interposed between the cover member 318 and the axial end 3162 of the rotor winding 316. From the viewpoint of increasing the thermal conductivity between the cover member 318 and the axial end 3162 of the rotor winding 316, it is desirable that the axial thickness of the resin portion 3164 on the axially outer side of the axial end 3162 of the rotor winding 316 (hereinafter simply referred to as "axial thickness of the resin portion 3164") be smaller.

In this regard, in the comparative example shown in FIG. 6, a cover member 318' has a planar shape. That is, the cover member 318' has an axial end face 3182' in a plane perpendicular to the axial direction. In the case of such a cover member 318', due to the shape of the axial end 3162 of the rotor winding 316 (the radially outer side protrudes axially outward more than the radially inner side), the axial thickness of a resin portion 3164' is likely to be relatively larger on the radially inner side than on the radially outer side. In this case, a problem occurs in that the thermal resistance between the cover member 318' and the axial end 3162 of the rotor winding 316 is relatively large due to the resin portion 3164' having a relatively large thickness on the radially inner side.

In the present embodiment, the cover member 318 is formed so that the axial thickness of the resin portion 3164 is substantially constant at each position in the radial direction. Specifically, in the present embodiment, the axial end face 3182 of the cover member 318 includes an inclined portion 31820 that is inclined such that the radially outer side is positioned on the axially outer side of the radially inner side in conformity with the shape of the axial end 3162 of the rotor winding 316 (the radially outer side protrudes axially outward more than the radially inner side). Thus, the axial thickness of the resin portion 3164 can be minimized at each position in the radial direction, and the axial end 3162 of the rotor winding 316 can be cooled efficiently by the oil via the cover member 318.

Since the cover member 318 includes the inclined portion 31820 in the present embodiment, the surface area of the axial end face 3182 of the cover member 318 can be increased compared to the comparative example shown in FIG. 6. That is, the cover member 318 has a bowl shape, and can therefore increase the surface area compared to the comparative example with the planar shape. As a result, the cooling performance via the axial end face 3182 of the cover member 318 can be increased. The axially outer face of the inclined portion 31820 (i.e., the axial end face 3182 of the cover member 318) need not be planar, and may be, for example, curved to be convex downward.

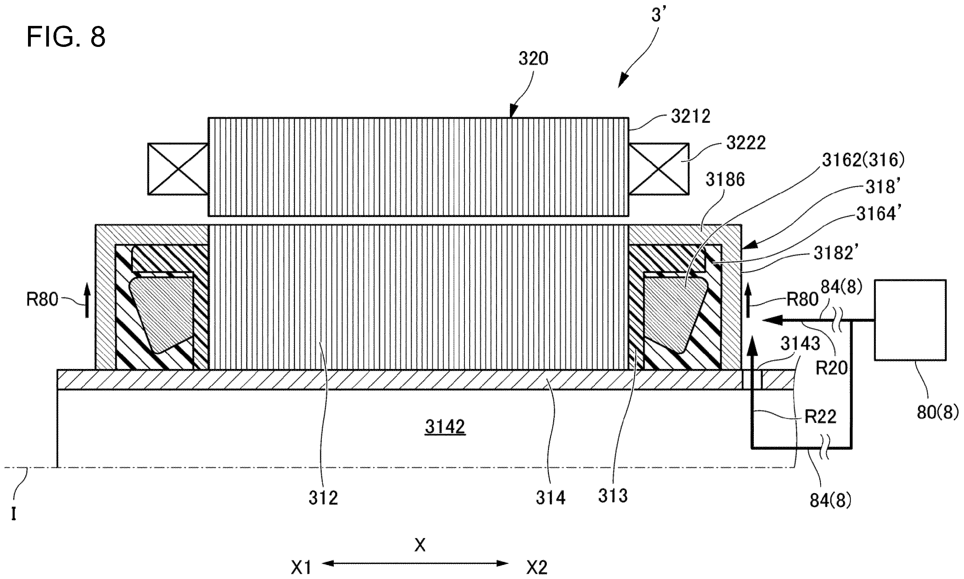

FIG. 7 is a diagram schematically showing a flow of oil at the inclined portion 31820 of the axial end face 3182 of the cover member 318 according to the present embodiment. FIG. 8 is a schematic sectional view of a rotary electric machine 3' according to the comparative example, and schematically shows a flow of oil on the axial end face 3182' of the cover member 318' according to the comparative example.

In the present embodiment and the comparative example, when the rotor 310 rotates, the oil supplied to the axial end face 3182 of the cover member 318 flows radially outward by a centrifugal force (see arrow R70 in FIG. 7 and arrow R80 in FIG. 8). In the comparative example, the oil supplied to the axial end face 3182' of the cover member 318' is less likely to remain on the axial end face 3182' because the axial end face 3182' has the planar shape perpendicular to the axial direction. Thus, the oil is likely to splash radially outward or axially outward.

In the present embodiment, the oil supplied to the axial end face 3182 of the cover member 318 flows radially outward by the centrifugal force (see arrow R70 in FIG. 7), but this flow is easily obstructed by the inclined portion 31820. For this reason, the oil supplied to the axial end face 3182 of the cover member 318 is relatively likely to remain on the axial end face 3182. For example, the oil is likely to remain in a space SC70 (space on the radially inner side of the inclined portion 31820) schematically shown by a hatched area in FIG. 7. Thus, the cooling performance via the axial end face 3182 of the cover member 318 can be increased.

The oil supplied to the inclined portion 31820 is eventually scattered radially outward by the centrifugal force (see arrow R71 in FIG. 7). In this regard, when the radially outer end of the inclined portion 31820 is positioned on the axially outer side of the axial end face 3212 of the stator core 321 as in the example shown in FIG. 7, it is difficult to supply the oil flowing radially outward along the inclined portion 31820 to the axial end face 3212 or the coil end portion 3222 of the stator core 321.

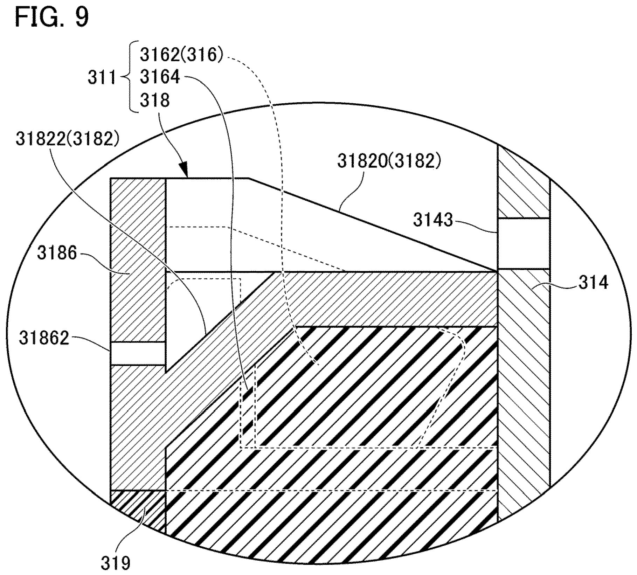

Although the inclined portion 31820 described above with reference to FIG. 5 etc. may be formed over the entire circumference, the inclined portion 31820 is preferably formed only within a circumferential range in which the inclined portion 31820 faces the axial end 3162 of the rotor winding 316 in the axial direction. That is, the axial end face 3182 of the cover member 318 preferably has a configuration different from that of the inclined portion 31820 in a circumferential range in which the axial end face 3182 does not face the axial end 3162 of the rotor winding 316 in the axial direction (hereinafter also referred to as "circumferential range between the tooth portions 3122"). Specifically, as will be described below with reference to FIGS. 9 and 10, the axial end face 3182 of the cover member 318 has a configuration in which the oil flows on the axially inner side of the inclined portion 31820 in the circumferential range between the tooth portions 3122.

FIG. 9 is a schematic sectional view showing the axial end 311 of the rotor 310, and is a sectional view at a circumferential position within the circumferential range between the tooth portions 3122 (circumferential position corresponding to line C-C in FIG. 4). FIG. 10 is a diagram schematically showing a flow of oil at a recess 31822 in the axial end face 3182 of the cover member 318 according to the present embodiment.

In the example shown in FIG. 9, the axial end face 3182 of the cover member 318 extends on the axially inner side of the inclined portion 31820 within the circumferential range between the tooth portions 3122. For this reason, the axial end face 3182 of the cover member 318 is likely to extend on the axially inner side of the axial end 3162 of the rotor winding 316 within the circumferential range between the tooth portions 3122. Thus, the oil flowing radially outward along the axial end face 3182 of the cover member 318 can easily be supplied to the axial end face 3212 or the coil end portion 3222 of the stator core 321 within the circumferential range between the tooth portions 3122.

In particular, in the example shown in FIG. 9, the cover member 318 includes, at its radially outer end, a side wall portion 3186 extending in the axial direction on the axially outer side of the axial end face 3182 of the cover member 318. The side wall portion 3186 has a radial through hole 31862. Thus, the oil supplied onto the axial end face 3182 of the cover member 318 can easily be supplied to the axial end face 3212 or the coil end portion 3222 of the stator core 321 via the radial through hole 31862 within the circumferential range between the tooth portions 3122.

The axially outer end of the side wall portion 3186 may be continuous with the radially outer portion of the inclined portion 31820 described above. In this case, the portions defining the axially outermost position of the cover member 318 may be the radially outer portion of the inclined portion 31820 and the axially outer end of the side wall portion 3186.

In the example shown in FIG. 9, the axial end face 3182 of the cover member 318 has the recess 31822 that is recessed axially inward beyond the through hole 31862 within the circumferential range between the tooth portions 3122. That is, the axial end face 3182 of the cover member 318 has the recess 31822 that is recessed axially inward at the circumferential position where the through hole 31862 is formed. In this case, the axial end face 3182 of the cover member 318 extends on the axially inner side of the through hole 31862 due to the recess 31822.

According to the present embodiment, the axial end face 3182 of the cover member 318 has the recess 31822 on the radially inner side of the through hole 31862 within the circumferential range between the tooth portions 3122. Thus, the oil flowing along the axial end face 3182 of the cover member 318 as described above within the circumferential range between the tooth portions 3122 can be guided to the through hole 31862 (see arrows R100, R101 in FIG. 10). For this purpose, when the oil passage 84 has the nozzle 3143 described above, the nozzle 3143 may preferably be provided at the circumferential position where the through hole 31862 is provided.

According to the present embodiment, the through hole 31862 can be formed on the axially inner side by increasing the depth (axial dimension) of the recess 31822 in the axial end face 3182 of the cover member 318. For example, the through hole 31862 can be formed on the axially inner side of the axial end face of the axial end 3162 of the rotor winding 316. Thus, the oil can easily be supplied via the through hole 31862 toward the axial end face 3212 or the coil end portion 3222 of the stator core 321 that may be positioned on the axially inner side of the axial end face of the axial end 3162 of the rotor winding 316 (see arrow R102 in FIG. 10). For this purpose, the through hole 31862 may be formed on the axially innermost side within a range in which the through hole 31862 is positioned on the axially outer side of the recess 31822. In this case, the axial position of the through hole 31862 can be brought as close to the axial position of the axial end face 3212 of the stator core 321 as possible.

Although the radial through hole 31862 may extend in the direction perpendicular to the axial direction as shown in FIG. 9, the through hole 31862 may extend in an oblique direction (e.g., in an oblique direction in which the radially outer side is on the axially inner side). When the radial through hole 31862 extends in the oblique direction, the oil sprayed from the through hole 31862 can easily be directed toward the axial end face 3212 of the stator core 321 even if the axial position of the through hole 31862 is on the axially outer side of the axial position of the axial end face 3212 of the stator core 321.

In the present embodiment, the recess 31822 and the through hole 31862 of the cover member 318 function as an oil guide. Specifically, as schematically shown by arrows R100, R101, and R102 in FIG. 10, the recess 31822 and the through hole 31862 of the cover member 318 allow the oil supplied via the oil passage 84 as described above to flow to the radially outer side of the axial end face 3182 of the cover member 318 and flow toward the axial end face 3212 or the coil end portion 3222 of the stator core 321 from the radially outer end of the axial end face 3182 of the cover member 318.

A plurality of sets of recesses 31822 and through holes 31862 is preferably provided while being positioned between the tooth portions 3122 of the rotor core 312 in the circumferential direction when viewed in the axial direction. That is, each pair of the recess 31822 and the through hole 31862 is preferably provided between the tooth portions 3122 of the rotor core 312 in the circumferential direction. One or more through holes 31862 may be provided for one recess 31822. In this manner, the plurality of recesses 31822 and the plurality of through holes 31862 may be provided within the circumferential range between the tooth portions 3122 (circumferential range in which they do not face the axial end 3162 of the rotor winding 316 in the axial direction). Thus, the oil can be sprayed from the plurality of circumferential through holes 31862 toward the axial end face 3212 or the coil end portion 3222 of the stator core 321. Accordingly, the cooling performance for the axial end face 3212 or the coil end portion 3222 of the stator core 321 can be increased effectively.

In the example shown in FIGS. 9 and 10, part or all of the side wall portion 3186 of the cover member 318 may be omitted within the circumferential range between the tooth portions 3122 of the rotor core 312. In this case, the function of the through hole 31862 can be realized by a missing portion of the side wall portion 3186 (cutout portion that is open on the axially outer side).

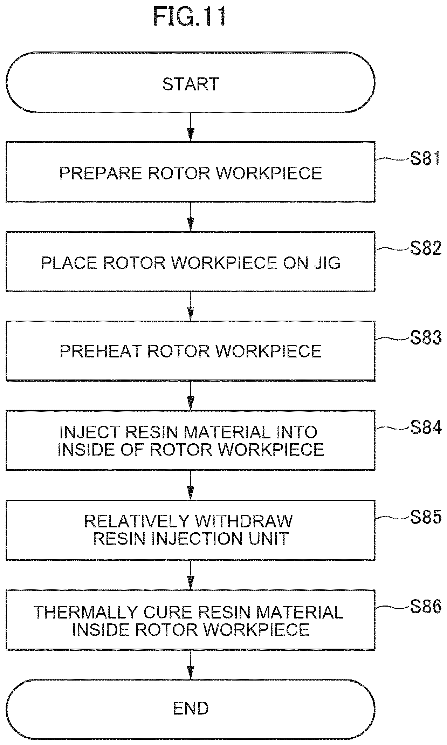

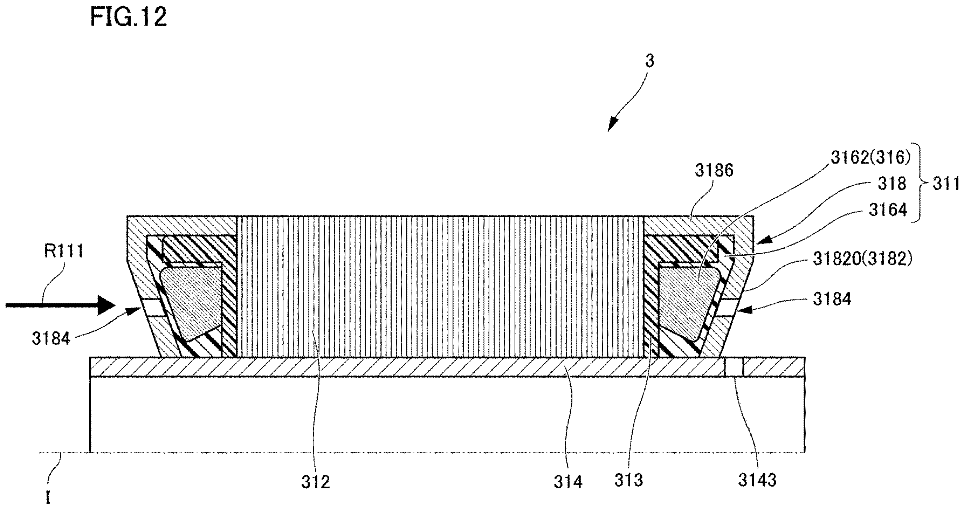

Next, a method for forming the resin portion 3164 in the present embodiment will be described in relation to a method for manufacturing the rotor 310 with reference to FIGS. 11 and 12.

FIG. 11 is a flowchart schematically showing a flow of the method for manufacturing the rotor 310 according to the present embodiment. FIG. 12 is a diagram illustrating a resin injection step in the manufacturing method shown in FIG. 11. The manufacturing method described below may be realized using, in a substantially similar manner, various apparatus as disclosed in WO2021/065613, the disclosure of which is incorporated herein by reference.

The manufacturing method first includes a preparation step (step S81) for preparing a rotor workpiece in a state before the resin portion 3164 is formed. The rotor workpiece in the state before the resin portion 3164 is formed may differ from the completed rotor 310, for example, only in that the rotor workpiece does not substantially include the resin portion 3164.

Next, the manufacturing method includes a step (step S82) of setting (placing) the rotor workpiece prepared in step S81 on a jig (not shown). The jig is optional and may be, for example, a jig as disclosed in WO2021/065613.

Next, the manufacturing method includes a step (step S83) of preheating the rotor workpiece set on the jig in step S82 using a preheating device (not shown). The preheating device is optional and may be a preheating device as disclosed in WO2021/065613. In this case, the preheating device may preheat the rotor workpiece set on the jig by heating it at a temperature equal to or higher than a first temperature T1 (e.g., 50°C) and lower than a second temperature T2 (e.g., 120°C). The first temperature T1 is a temperature at which a resin material described later melts (temperature at which melting starts). The second temperature T2 is a temperature at which the resin material is cured (thermally cured) (temperature at which curing (thermal curing) starts) and that is higher than the first temperature T1.

Next, the manufacturing method includes a resin injection step (step S84) for injecting a resin material into the inside of the rotor workpiece preheated in step S83 using a resin injection device (not shown). The "inside of the rotor workpiece" means a substantially closed space (e.g., a closed space except through holes 3184) formed between the cover members 318 on both axial sides of the rotor workpiece. The inside of the rotor workpiece may be closed on the radially outer side by the radial cover 319.

In the resin injection step, the resin injection device (injection unit) has its resin injection unit (not shown) positioned relative to each through hole 3184 of the rotor workpiece so that each through hole 3184 serves as an injection hole for the resin material. The resin injection device injects the resin material melted at the first temperature T1 or higher into the inside of the rotor workpiece via each through hole 3184. The detailed structure of the resin injection device is optional and may be a detailed structure as disclosed in WO2021/065613.

The injected resin material is a material for forming the resin portion 3164. In the example shown in FIG. 11, the injected resin material may melt at the first temperature T1 and may be cured at the second temperature T2 higher than the first temperature T1. The resin material may be, for example, a resin material (synthetic resin material) as described in Japanese Unexamined Patent Application Publication No. 2000-239642 (JP 2000-239642 A). In this case, the resin material includes a reactive hot melt adhesive composition characterized by containing 10% or more and 100% or less of a first compound having 100 eq/T or more of a uretdione ring, 0% or more and 90% or less of a second compound having an active hydrogen group at a molecular terminal, and 0% or more and 90% or less of a third compound having a glycidyl group, and characterized in that none of the first to third compounds contains an isocyanate group at a molecular terminal. The resin material described in JP 2000-239642 A is solid (flake, pellet, powder, etc.) at room temperature, and is melted (softened) when the resin material is heated and the temperature of the resin material reaches the first temperature T1. This resin material is not cured while being maintained at the first temperature T1. The resin material is cured when the temperature reaches the second temperature T2 higher than the first temperature T1.

In the present embodiment, the resin injection step includes injecting the resin material from the through hole 3184 in the cover member 318 on one axial side as schematically shown in FIG. 12 (arrow R111). At this time, the resin injection unit positioned at the through hole 3184 in the cover member 318 on the one axial side and a resin discharge unit positioned at the through hole 3184 in the cover member 318 on the other axial side may be placed so that the entire through holes 3184 are filled with the resin material. The resin discharge unit may be part of a jig or mold. The resin discharge unit may be configured to discharge a predetermined amount of the resin material from the through hole 3184 in the cover member 318 on the other axial side, or may be configured to prevent the resin material from leaking out from the through hole 3184 in the cover member 318 on the other axial side (i.e., to dam the resin material).

Next, the manufacturing method includes a step (step S85) of withdrawing the resin injection unit (not shown) of the resin injection device (not shown) by moving it axially outward.

Next, the manufacturing method includes a thermal curing step (step S86) for thermally curing the resin material injected into the inside of the rotor workpiece in step S84 using a curing heating device (not shown). The thermal curing step includes heating at a temperature equal to or higher than the second temperature T2 at which the resin material is cured. The curing heating device is optional and may be a device separate from the preheating device.

With this manufacturing method, the resin material for forming the resin portion 3164 can efficiently be injected into the inside of the rotor workpiece by utilizing the through hole 3184 described above.

Next, another embodiment alternative to the above embodiment will be described.

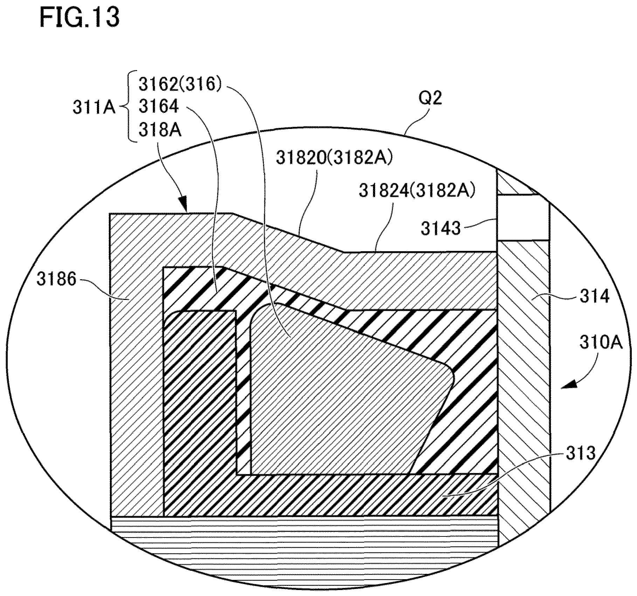

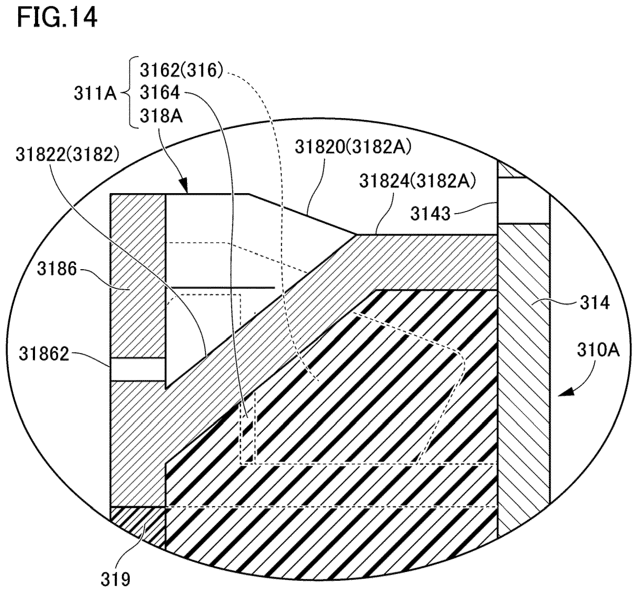

FIGS. 13 and 14 are schematic sectional views showing an axial end 311A of a rotor 310A according to the other embodiment, and correspond to FIGS. 5 and 9 described above in relation to the above embodiment.

The rotor 310A of the present embodiment differs from the rotor 310 of the above embodiment in that the axial end 311 is replaced with the axial end 311A. The axial end 311A of the present embodiment differs from the axial end 311 of the above embodiment in that the cover member 318 is replaced with a cover member 318A. The cover member 318A of the present embodiment differs from the cover member 318 of the above embodiment in that the axial end face 3182 is replaced with an axial end face 3182A.

The axial end face 3182A of the present embodiment differs from the axial end face 3182 of the above embodiment in that the axial end face 3182A includes a horizontal portion 31824 in addition to the inclined portion 31820. The horizontal portion 31824 is continuous with the radially inner side of the inclined portion 31820. The horizontal portion 31824 has a circular ring shape around the rotation axis I when viewed in the axial direction.

Although the embodiments are described in detail above, the present disclosure is not limited to the specific embodiments, and various modifications and changes can be made within the scope of the claims. It is also possible to combine all or part of the constituent elements of the embodiments described above.

### Description of the Reference Numerals

3 ... rotary electric machine (wound-field rotary electric machine), 320 ... stator, 321 ... stator core, 322 ... stator winding (stator coil), 3212 ... axial end face, 310 ... rotor, 312 ... rotor core, 3122 ... tooth portion, 314 ... shaft portion, 316 ... rotor winding (field winding), 3162 ... axial end, 3164 ... resin portion, 318 ... cover member, 3182 ... axial end face (axially outer end face), 31820 ... inclined portion, 31822 ... recess, 3186 ... side wall portion, 31862 ... through hole, 84 ... oil passage (coolant passage), 80 ... oil pump (pump)

## Claims

1. A wound-field rotary electric machine comprising:
a stator including a stator core and a stator coil;
a rotor including a shaft portion, a rotor core coaxially fixed to the shaft portion, and a field winding that is wound around a tooth portion of the rotor core, the rotor being disposed coaxially with the stator with a clearance provided in a radial direction; and
a coolant passage that communicates with a pump configured to pump a liquid coolant, wherein
the stator coil includes a coil end portion that protrudes in an axial direction from an axial end face of the stator core,
an axial end of the field winding protrudes in the axial direction from an axial end face of the rotor core and is covered with a resin portion,
the rotor further includes a cover member that covers the axial end of the field winding,
the liquid coolant is supplied to an axially outer end face of the cover member via the coolant passage, and
the axially outer end face of the cover member has a recess extending on an axially inner side of the axial end of the field winding between the tooth portions of the rotor core in a circumferential direction when viewed in the axial direction.

2. The wound-field rotary electric machine according to claim 1, wherein the resin portion extends to fill a gap between the cover member and the field winding.

3. The wound-field rotary electric machine according to claim 1, wherein:
the cover member includes, at a radially outer end, a side wall portion extending in the axial direction on an axially outer side of the axially outer end face of the cover member; and
the side wall portion has a radial through hole.

4. The wound-field rotary electric machine according to claim 3, wherein the recess is recessed axially inward beyond the through hole at a circumferential position where the through hole is formed.

5. The wound-field rotary electric machine according to claim 4, wherein a plurality of sets of the through holes and the recesses is provided while being positioned between the tooth portions of the rotor core in the circumferential direction when viewed in the axial direction.

6. The wound-field rotary electric machine according to any one of claims 1 to 5, wherein:
the axial end of the field winding is structured such that a radially outer side protrudes axially outward more than a radially inner side; and
the axially outer end face of the cover member includes an inclined portion that is inclined such that a radially outer side is positioned on an axially outer side of a radially inner side.

7. The wound-field rotary electric machine according to claim 6, wherein a radially outer end of the inclined portion is positioned on the axially outer side of the axial end face of the stator core.
